# FASCICULE DE BREVET EUROPEEN

(11) **EP 3 194 896 B1**
(45) Date de publication et mention de la délivrance du brevet: **16.06.2021**
(21) Numéro de dépôt: 15771692.9
(22) Date de dépôt: 15.09.2015
(51) Int. Cl.: G01D 5/244, G01D 3/08

(54) **SONDE DE MESURE COMPORTANT UN ELEMENT SENSIBLE**
MESSSONDE MIT EINEM SENSORELEMENT
MEASURING PROBE COMPRISING A SENSING ELEMENT

(30) Priorité: 19.09.2014 FR 1458877
(43) Date de publication de la demande: 26.07.2017
(73) Titulaire: SC2N, 94046 Creteil Cedex (FR)
(72) Inventeur: GUEGUEN, Olivier, 14000 Caen (FR); BOUTEVEILLES, Arnaud, 14550 Blainville Sur Orne (FR); COUASSE, Philippe, 14125 Mondeville (FR)
(74) Mandataire: Garcia, Christine
(86) Numéro de dépôt international: PCT/FR2015/052462
(87) Numéro de publication internationale: WO 2016/042251

(56) Documents cités:
- EP-A1- 0 940 655
- EP-A2- 2 485 023
- GB-A- 2 207 297
- US-A1- 2001 004 845
- US-A1- 2009 127 638
- US-A1- 2013 036 799

## Description

La présente invention concerne une sonde de mesure, notamment utilisée dans le domaine automobile.

On connait, par exemple du document US2013/036799, des sondes pour mesurer une température, sonde pourvue d'un élément sensible à la température placé dans un écoulement de fluide, par exemple dans un écoulement d'air d'admission d'un moteur à combustion d'un véhicule. Ce placement dans l'écoulement permet avantageusement d'obtenir une information précise de la température. Ceci nécessite néanmoins d'amener l'élément sensible relativement loin du reste de la sonde, notamment d'un circuit imprimé ou support céramique qui n'est pas placé dans l'écoulement de fluide. Cette connexion entre l'élément sensible et le circuit imprimé ou le support céramique est réalisée par des pattes avec une longueur suffisante, notamment comprise entre 10 et 50 mm.

Durant l'assemblage de la sonde, ces pattes de connexion relativement longues sont préalablement mises en forme par des opérations de pliage pour pouvoir être assemblées avec le circuit imprimé, avec un positionnement correct.

Ainsi, la sonde se retrouve configurée dans une configuration tridimensionnelle avant le début des opérations d'assemblage dans le capteur.

La sonde possède donc un sens de montage, ce qui rend délicat l'assemblage en automatique par un robot, car une reconnaissance automatique de l'orientation de la sonde devient nécessaire.

Le diamètre des pattes est compris notamment entre 0,2 millimètre et 0,6 millimètre, ce qui fait que la résistance mécanique de la structure tridimensionnelle formée par la sonde de mesure est faible.

De ce fait, les manipulations de la sonde lors des opérations d'assemblage peuvent entrainer une altération de la configuration géométrique qui lui a été donnée, ce qui fait que les extrémités des fils ne coïncident plus, ou seulement partiellement, avec les plages d'accueils du circuit imprimé ou du support céramique. En raison de ce positionnement imparfait, la qualité de la liaison électrique entre les pattes et le circuit imprimé est dégradée ou défaillante, générant notamment des rebuts en production, voire des défauts électriques.

Il est connu du document US2013/036799 une sonde de mesure comportant de tels pattes

La présente invention a notamment pour objet de pallier un ou plusieurs des inconvénients des dispositifs de l'art antérieur.

Pour cela la présente invention propose un capteur notamment pour véhicule automobile, comportant :
- un substrat, notamment un circuit imprimé ou un support céramique
- une sonde de mesure connectée électriquement, notamment par brasure, au substrat,le substrat comportant au moins une ouverture et la sonde de mesure est disposée au moins partiellement dans cette ouverture, et comportant un élément sensible la sonde de mesure comportant :
   deux pattes connectées à l'élément sensible, ces pattes étant coplanaires, et comportant chacune une portion de connexion électrique, les pattes de connexion comportant chacune une portion rectiligne se raccordant à la portion de connexion associée, les portions rectilignes étant parallèles entre elles, la portion rectiligne et la portion de connexion de chaque patte formant entre elles un angle sensiblement égal à 90°, ces portions de connexion étant agencées de manière colinéaire.

Le fait que les pattes de la sonde de mesure soient coplanaires fait qu'il est possible de la manipuler sans créer de contrainte qui tendrait à déformer les pattes.

Selon une caractéristique de l'invention, ces portions de connexion sont agencées pour pointer dans des directions opposées.

Selon une autre caractéristique de l'invention, les portions de connexion des pattes sont symétriques l'une de l'autre par rapport à un plan médian passant par l'élément sensible.

Le fait que la sonde de mesure soit symétrique fait qu'il n'y a pas de sens de montage. Le risque d'erreur au montage est donc supprimé.

Selon encore une autre caractéristique de l'invention, les pattes de connexion comportent chacune une portion rectiligne se raccordant à la portion de connexion associée.

Avantageusement, les portions rectilignes sont parallèles entre elles.

De préférence, les portions rectilignes sont de longueur supérieure à la longueur des portions de connexion.

Selon un mode de réalisation de l'invention, la portion rectiligne et la portion de connexion de chaque patte forment entre elles un angle sensiblement égal à 90°.

Par exemple, la longueur développée de l'une des pattes est comprise entre 10 et 80 millimètres, notamment entre 20 et 60 millimètres.

Préférentiellement, la portion de connexion est dénudée et la portion rectiligne est au moins partiellement recouverte d'une gaine isolante ou d'un revêtement.

Le cas échéant, la portion de connexion présente un diamètre inférieur à 1 millimètre, notamment compris entre 0,2 millimètre et 0,6 millimètre, de préférence compris entre 0,25 millimètre et 0,45 millimètre.

Selon un mode de réalisation de l'invention, l'élément sensible est sensible à la température de son environnement.

Par exemple, l'élément sensible comporte une thermistance à coefficient de température négatif.

En variante, l'élément sensible comporte une thermistance à coefficient de température positif.

En variante encore, l'élément sensible comporte un thermocouple.

Selon un mode de réalisation de l'invention, la sonde est agencée pour être connectée électriquement, notamment par brasure, à un substrat, notamment un circuit imprimé ou un support céramique.

L'invention a également pour objet un capteur notamment pour véhicule automobile, comportant :
- un substrat, notamment un circuit imprimé ou un support céramique,
- une sonde de mesure telle que décrite ci-dessus, connectée électriquement, notamment par brasure, au substrat.

Selon un mode de réalisation de l'invention, le substrat comporte au moins une ouverture et la sonde de mesure est disposée au moins partiellement dans cette ouverture.

Le cas échéant, le capteur comporte un support portant le substrat et ce support est pourvu d'au moins un élément de guidage agencé pour coopérer avec la portion de connexion de la patte de la sonde.

Préférentiellement, l'élément de guidage comporte une cavité pouvant recevoir au moins partiellement la portion de connexion de la sonde de mesure, cette cavité présentant notamment une forme en V ou en U.

Avantageusement, l'élément de guidage de la sonde de mesure est agencé pour guider le substrat lors de sa mise en place dans le support.

Dans un mode de réalisation de l'invention, le capteur de température comporte :
- une sonde de mesure telle que décrite précédemment, agencée pour mesurer une température,
- une sonde de mesure de pression notamment séparée de la sonde de mesure de température, les deux sondes étant au contact du même fluide,
- un connecteur permettant de connecter le capteur à un système électrique ou électronique, apte à lire le signal de mesure de chacune des sondes.

Selon une première variante de l'invention, les signaux de sortie délivrés sont de type analogique.

Selon une deuxième variante de l'invention, les signaux de sortie délivrés sont de type numérique.

L'invention concerne aussi un répartiteur d'air d'admission pour moteur thermique intégrant un capteur tel que décrit précédemment
L'invention concerne de plus un moteur thermique intégrant un répartiteur tel que décrit précédemment.

Enfin, l'invention se rapporte également à un procédé d'assemblage de la sonde dans un capteur tel que décrit précédemment.

L'invention pourra être mieux comprise à la lecture de la description faite ci-après, en se référant aux figures annexées données à titre d'exemple.
La figure 1 représente, schématiquement et partiellement, une sonde de mesure conforme à un exemple de mise en œuvre de l'invention décrite.
La figure 2 est une vue partielle d'un capteur comportant la sonde de la figure 1,
La figure 3 est une vue en perspective du capteur de la figure 2.
La figure 4 montre, par une vue schématique et partielle du capteur, un exemple d'intégration d'une sonde de mesure conforme à l'invention dans un capteur.
La figure 5 représente une vue en coupe d'un élément de guidage du capteur des figures 2 et 3.

La présente invention concerne une sonde de mesure, destinée à être intégrée dans un capteur.

Un mode de réalisation concerne un capteur de pression et température, mesurant notamment la pression et la température d'admission d'un moteur à combustion, et incorporant une sonde de mesure selon l'invention.

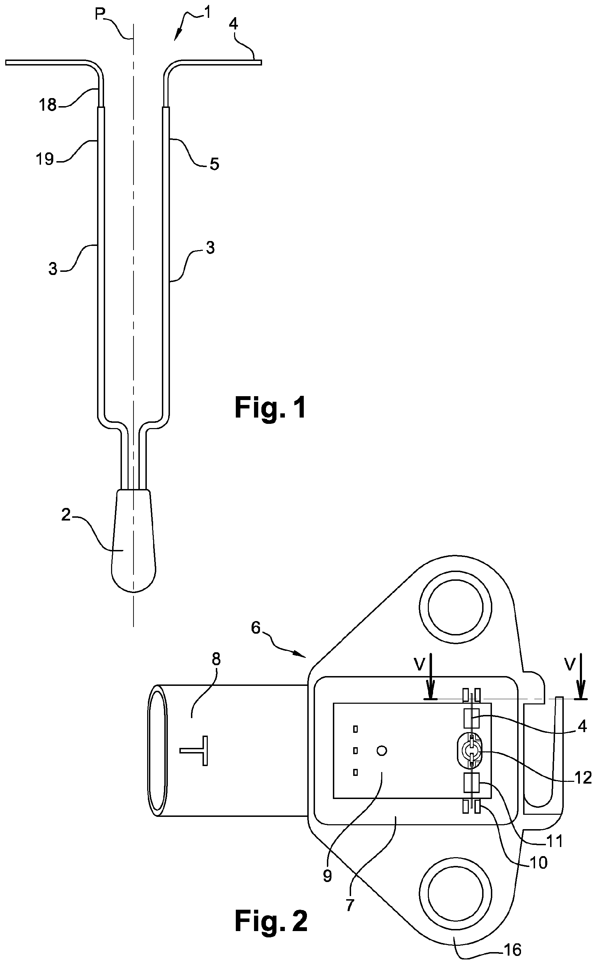

On a représenté sur la figure 1 une sonde 1 selon un exemple de mise en œuvre de l'invention, cette sonde 1 comportant :
- un élément sensible 2
- deux pattes 3 connectées à l'élément sensible et coplanaires.

L'extrémité des pattes 3 comportent chacune une portion de connexion 4. Ces portions de connexion électrique 4 sont agencées de manière colinéaire ou formant éventuellement entre elles un angle faible, compris entre 0° et 5°, résultant d'éventuels défauts géométriques de fabrication.

Selon un mode de réalisation de l'invention, les pattes 3 comportent chacune une portion de connexion 4, ces portions de connexion 4 étant agencées pour pointer dans des directions opposées .

Comme également illustré par la figure 1, les portions de connexion 4 des pattes 3 sont symétriques l'une de l'autre par rapport à un plan médian P passant par l'élément sensible 2.

Les pattes de connexion 3 comportent chacune une portion rectiligne 5 se raccordant à la portion de connexion 4 associée.

Les portions rectilignes 5 sont parallèles entre elles.

De préférence, Les portions rectilignes 5 sont de longueur supérieure à la longueur des portions de connexion 4.

Selon un mode de réalisation de l'invention, la portion rectiligne 5 et la portion de connexion 4 de chaque patte 3 forment entre elles un angle sensiblement égal à 90°.

Suivant les applications, la longueur varie pour faire en sorte que l'élément sensible soit placé sensiblement au centre de l'écoulement.

Par exemple, la longueur développée de l'une des pattes 3 est comprise 10 et 80 millimètres.

Préférentiellement, la portion de connexion 4 est dénudée et la portion rectiligne 5 est au moins partiellement recouverte d'une gaine isolante ou d'un revêtement. La gaine 19 recouvre la partie métallique 18 de la patte sur une partie de sa longueur et permet de protéger la portion recouverte des pattes 3 des agressions extérieures, chimiques ou mécaniques, occasionnées par l'air d'admission.

Le cas échéant, la portion de connexion 4 présente un diamètre inférieur à 1 millimètre, notamment compris entre 0,2 et 0,6 millimètre, de préférence compris entre 0,25 et 0,45 mm.

Selon un mode de réalisation de l'invention, l'élément sensible 2 est sensible à la température de son environnement.

Par exemple, l'élément sensible 2 comporte une thermistance à coefficient de température négatif. La résistance électrique d'un tel élément diminue de façon monotone et continue lorsque la température augmente, suivant une relation spécifique au matériau employé pour constituer l'élément.

Selon un autre mode de réalisation, non illustré, l'élément sensible 2 comporte une thermistance à coefficient de température positif. Dans ce cas, la résistance de l'élément sensible augmente de façon monotone et continue lorsque la température augmente, suivant une relation spécifique au matériau employé pour constituer l'élément.

Selon un autre mode de réalisation, non illustré dans la présente demande, l'élément sensible 2 mesurant la température comporte un thermocouple. Ce type d'élément sensible crée une différence de potentiel proportionnelle à la différence de température entre la jonction chaude et la jonction froide du thermocouple.

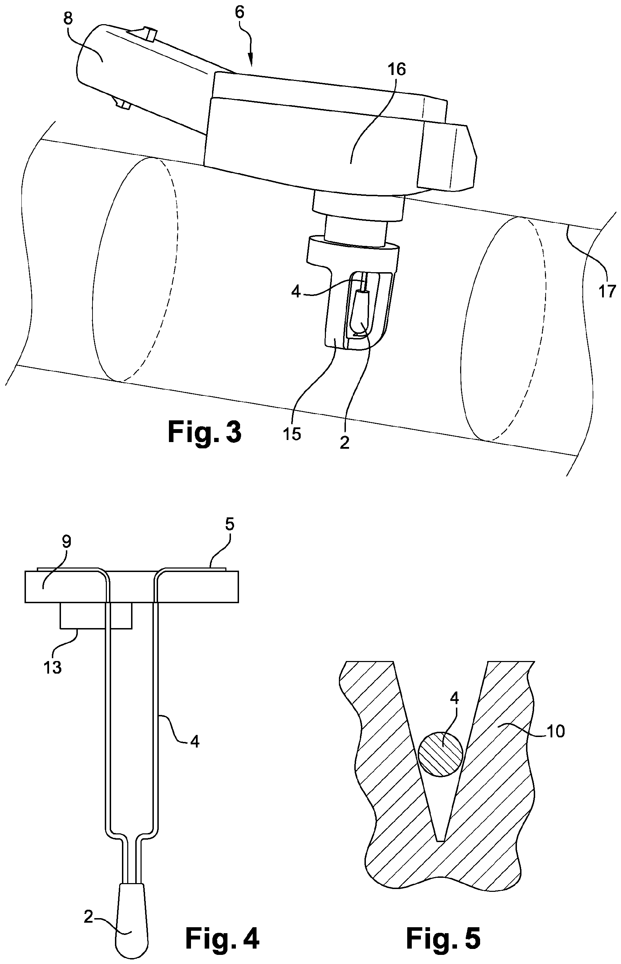

La sonde 1 est agencée pour être connectée électriquement, notamment par brasure, à un substrat 9, notamment un circuit imprimé ou un support céramique. Comme on peut le voir sur la figure 3, les extrémités de portion de connexion 4 reposent à plat sur les plages d'accueil 11 du substrat 9, en vue d'une opération de brasage pour assurer le contact électrique.

On a représenté sur les figures 2 et 3 un capteur 6 comportant :
- un substrat 9,
- la sonde de mesure 1, connectée électriquement, notamment par brasure, au substrat 9.

Sur la figure 2 le capot de protection fermant normalement le corps 7 a été omis afin de montrer l'intérieur du capteur 6.

Le substrat 9 comporte une ouverture 12 et la sonde de mesure 1 est disposée au moins partiellement dans cette ouverture. Sur la figure 2, la sonde de mesure 1 est agencée pour traverser le substrat 9.

Le support 7 comporte au moins un élément de guidage 10 agencé pour coopérer avec la portion de connexion 5 d'une patte 3 de la sonde 1.

L'élément de guidage 10 comporte une cavité pouvant recevoir au moins partiellement la portion de connexion de la sonde, cette cavité présentant notamment une forme en V ou en U.

Sur la figure 5, la cavité présente une forme en V, la portion de connexion est insérée dans la portion la plus large du V et est guidée latéralement jusqu'à venir en butée au fond de la cavité.

L'élément de guidage 10 de la sonde de mesure 1 est également agencé pour guider le substrat 9 lors de la mise en place dans le support.

L'opération de montage du substrat 9 s'en trouve ainsi facilitée.

Dans un mode de réalisation de l'invention, le capteur de température notamment pour véhicule automobile, comporte :
- une sonde de mesure 1 telle que décrite précédemment, mesurant une température
- une sonde de mesure de pression 13 notamment séparée de la sonde de mesure de température 1, les 2 sondes étant au contact du même fluide,
- un connecteur 8,
   Le connecteur permettant de connecter le capteur à un système électrique ou électronique, apte à lire le signal de mesure de chacune des sondes.

Un tel capteur permet de combiner deux fonctions, ce qui limite le nombre d'interfaces mécaniques à prévoir pour loger ces capteurs dans leur environnement, et simplifie le câblage électrique, en limitant le nombre de connexions et de ramifications.

La figure 3 représente un tel capteur, où on voit l'extrémité de la sonde de mesure 2 qui est protégée par une arche 15 agencée dans le corps du capteur. Cette arche permet de protéger l'extrémité de la sonde de mesure des chocs pouvant se produire lors du transport du composant avant assemblage sur moteur, pendant l'assemblage sur moteur ou éventuellement pendant le fonctionnement sur moteur. L'arche est largement ajourée et n'empêche pas le flux d'air d'accéder à la sonde de mesure.

Les signaux de sortie délivrés sont de type analogique. Dans ce mode de réalisation, l'organe utilisant ces informations fait l'acquisition des niveaux de tension délivrée par le capteur.

Sur d'autres applications, les signaux de sortie délivrés sont de type numérique. Dans ce cas, la transmission des mesures entre le capteur et l'organe utilisant ces informations se fait par un protocole de communication numérique.

L'invention concerne aussi un répartiteur d'air d'admission pour moteur thermique, non représenté, intégrant un capteur tel que décrit précédemment.

Le capteur décrit précédemment mesure alors la température et la pression du mélange gazeux circulant dans le répartiteur d'admission, constitué essentiellement d'air mais pouvant comporter également des gaz d'échappement recirculés à l'admission, des vapeurs d'huile provenant du recyclage des gaz des carters, et des vapeurs de carburant pouvant provenir du réservoir.

Afin d'obtenir une température représentative de la température réelle de l'écoulement de fluide, la sonde de mesure sera disposée sensiblement au centre de la veine fluide, en tous cas loin de la paroi. A l'inverse, la sonde de mesure de pression peut être logée à l'intérieur du corps du capteur.

Une portion du répartiteur d'admission constitue une embase dans laquelle le capteur est inséré, un système de retenue permettant ensuite d'assurer le maintien en position du capteur.

Le capteur peut ainsi être vissé, par une ou plusieurs vis traversant une ou des pattes de fixations agencées dans le corps du capteur.

L'invention concerne de plus un moteur thermique intégrant un répartiteur tel que décrit précédemment.

La mesure de la pression et la température va permettre au système de contrôle pilotant le moteur thermique de déterminer notamment la densité de l'air admis, cette information permettant d'optimiser le pilotage du moteur, afin notamment de réduire les émissions polluantes et de maximiser les performances.

Enfin, l'invention se rapporte également à un procédé d'assemblage de la sonde de mesure dans un capteur tel que décrit précédemment.

Pour les raisons évoquées précédemment, l'assemblage du capteur est facilité par rapport à l'état de l'art lorsque l'invention est mise en œuvre.

## Revendications

1. Capteur (6) notamment pour véhicule automobile, comportant :
- un substrat (9), notamment un circuit imprimé ou un support céramique
- une sonde de mesure (1) connectée électriquement, notamment par brasure, au substrat,le substrat (9) comportant au moins une ouverture (12) et la sonde de mesure (1) est disposée au moins partiellement dans cette ouverture (12), et comportant un élément sensible (2) **caractérisé en ce que** la sonde de mesure (1) comporte :
deux pattes (3) connectées à l'élément sensible, ces pattes étant coplanaires, et comportant chacune une portion de connexion électrique, les pattes de connexion comportant chacune une portion rectiligne se raccordant à la portion de connexion associée, les portions rectilignes étant parallèles entre elles, la portion rectiligne et la portion de connexion de chaque patte formant entre elles un angle sensiblement égal à 90°, ces portions de connexion (4) étant agencées de manière colinéaire.

2. Capteur (6) selon la revendication 1, **caractérisé en ce que** les portions de connexion (4) sont agencées pour pointer dans des directions opposées.

3. Capteur (6) selon la revendication 2, **caractérisée en ce que** les portions de connexion (4) des pattes (3) sont symétriques l'une de l'autre par rapport à un plan médian passant par l'élément sensible (2).

4. Capteur (6) selon l'une des revendications 1 à 3, dans laquelle la portion de connexion (4) présente un diamètre inférieur à 1 millimètre, notamment compris entre 0,2 millimètre et 0,6 millimètre, de préférence compris entre 0,25 millimètre et 0,45 millimètre.

5. Capteur(6) selon l'une quelconque des revendications précédentes, dans laquelle l'élément sensible (2) est sensible à la température de son environnement.

6. Capteur selon l'une des revendications précédentes, comportant un support (7) portant le substrat et pourvu d'au moins un élément de guidage (10) agencé pour coopérer avec la portion de connexion (5) de la patte (3) de la sonde.

7. Capteur selon la revendication précédente, dans lequel l'élément de guidage (10) comporte une cavité pouvant recevoir au moins partiellement la portion de connexion (4) de la sonde de mesure (1), cette cavité présentant notamment une forme en V ou en U.

8. Capteur selon l'une des revendications 6 ou 7, dans lequel l'élément de guidage (10) de la sonde de mesure (1) est agencé pour guider le substrat (9) lors de sa mise en place dans le support.

9. Capteur de température notamment pour véhicule automobile, comportant :
- une sonde de mesure (1) selon une des revendications 1 à 5,
- une sonde de mesure de pression (13) notamment séparée de la sonde de mesure (1) de température, les deux sondes étant au contact du même fluide
- un connecteur (8)
**caractérisé par le fait que** le connecteur permet de connecter le capteur à un système électrique ou électronique, apte à lire le signal de mesure de chacune des sondes.

## Patentansprüche

1. Messfühler (6), insbesondere für ein Kraftfahrzeug, der Folgendes umfasst:
- ein Substrat (9), insbesondere eine gedruckte Schaltung oder einen keramischen Träger,
- eine Messsonde (1), die mit dem Substrat, insbesondere durch Löten, elektrisch verbunden ist, wobei das Substrat (9) mindestens eine Öffnung (12) umfasst und die Messsonde (1) mindestens teilweise in dieser Öffnung (12) angeordnet ist, und die ein Sensorelement (2) umfasst, **dadurch gekennzeichnet, dass** die Messsonde (1) Folgendes umfasst:
zwei mit dem Sensorelement verbundene Beine (3), wobei diese Beine komplanar sind und jeweils einen elektrischen Verbindungsabschnitt umfassen, wobei die Verbindungsbeine jeweils einen geradlinigen Abschnitt umfassen, der an den assoziierten Verbindungsabschnitt angeschlossen ist, wobei die geradlinigen Abschnitte zueinander parallel sind, wobei der geradlinige Abschnitt und der Verbindungsabschnitt jedes Beins einen Winkel im Wesentlichen gleich 90° zueinander bilden, wobei diese Verbindungsabschnitte (4) kollinear angeordnet sind.

2. Messfühler (6) nach Anspruch 1, **dadurch gekennzeichnet, dass** die Verbindungsabschnitte (4) so angeordnet sind, dass sie in unterschiedliche Richtungen zeigen.

3. Messfühler (6) nach Anspruch 2, **dadurch gekennzeichnet, dass** die Verbindungsabschnitte (4) der Beine (3) in Bezug auf eine Mittelebene, die durch das Sensorelement (2) verläuft, zueinander symmetrisch sind.

4. Messfühler (6) nach einem der Ansprüche 1 bis 3, wobei der Verbindungsabschnitt (4) einen Durchmesser kleiner als 1 Millimeter, insbesondere zwischen 0,2 Millimetern und 0,6 Millimetern, vorzugsweise zwischen 0,25 Millimetern und 0,45 Millimetern aufweist.

5. Messfühler (6) nach einem der vorhergehenden Ansprüche, wobei das Sensorelement (2) gegenüber der Temperatur seiner Umgebung empfindlich ist.

6. Messfühler nach einem der vorhergehenden Ansprüche, der eine Stütze (7) umfasst, die das Substrat trägt und über mindestens ein Führungselement (10) verfügt, das dazu angeordnet ist, mit dem Verbindungsabschnitt (5) des Beins (3) der Sonde zusammenzuwirken.

7. Messfühler nach dem vorhergehenden Anspruch, wobei das Führungselement (10) einen Hohlraum umfasst, der den Verbindungsabschnitt (4) der Messsonde (1) mindestens teilweise aufnehmen kann, wobei dieser Hohlraum im Wesentlichen eine Form eines V oder eines U aufweist.

8. Messfühler nach einem der Ansprüche 6 oder 7, wobei das Führungselement (10) der Messsonde (1) dazu angeordnet ist, das Substrat (9) während seiner Anbringung in der Stütze zu führen.

9. Temperaturmessfühler, insbesondere für ein Kraftfahrzeug, der Folgendes umfasst:
- eine Messsonde (1) nach einem der Ansprüche 1 bis 5,
- eine Druckmesssonde (13), die insbesondere von der Temperaturmesssonde (1) getrennt ist, wobei die zwei Sonden mit demselben Fluid in Kontakt sind,
- einen Verbinder (8),
**dadurch gekennzeichnet, dass** der Verbinder es ermöglicht, den Messfühler mit einem elektrischen oder elektronischen System zu verbinden, welches das Messsignal jeder der Sonden lesen kann.

## Claims

1. Sensor (6), in particular for a motor vehicle, comprising:
- a substrate (9), in particular a printed circuit board or a ceramic support,
- a measurement probe (1) electrically connected, in particular by brazing, to the substrate, the substrate (9) comprising at least one opening (12) and the measurement probe (1) being arranged at least partially in said opening (12), and comprising a sensitive element (2),
**characterized in that** the measurement probe (1) comprises:
two legs (3) connected to the sensitive element, these legs being coplanar, and each comprising an electrical connection portion, the connection legs each comprising a rectilinear portion connecting to the associated connection portion, the rectilinear portions being parallel to one another, the rectilinear portion and the connection portion of each leg forming an angle substantially equal to 90° between them, these connection portions (4) being arranged in a collinear manner.

2. Sensor (6) according to Claim 1, **characterized in that** the connection portions (4) are arranged to point in opposite directions.

3. Sensor (6) according to Claim 2, **characterized in that** the connection portions (4) of the legs (3) are symmetrical to one another in relation to a median plane through the sensitive element (2).

4. Sensor (6) according to one of Claims 1 to 3, wherein the diameter of the connection portion (4) is less than 1 millimetre, in particular between 0.2 millimetre and 0.6 millimetre, preferably between 0.25 millimetre and 0.45 millimetre.

5. Sensor (6) according to any one of the preceding claims, wherein the sensitive element (2) is sensitive to the temperature of its environment.

6. Sensor according to one of the preceding claims, comprising a support (7) bearing the substrate and provided with at least a guide element (10) arranged to cooperate with the connection portion (5) of the leg (3) of the probe.

7. Sensor according to the preceding claim, wherein the guide element (10) comprises a cavity capable of at least partially receiving the connection portion (4) of the measurement probe (1), this cavity having in particular a V or U shape.

8. Sensor according to either of Claims 6 and 7, wherein the guide element (10) of the measurement probe (1) is arranged to guide the substrate (9) when it is placed in the support.

9. Temperature sensor, in particular for a motor vehicle, comprising:
- a measurement probe (1) according to any one of Claims 1 to 5,
- a pressure measurement probe (13), in particular separated from the temperature measurement probe (1), the two probes being in contact with the same fluid,
- a connector (8),
**characterized by** the fact that the connector allows the sensor to be connected to an electrical or electronic system, able to read the measurement signal from each of the probes.
